# EUROPEAN PATENT SPECIFICATION

(11) **EP 3 600 977 B1**
(45) Date of publication and mention of the grant of the patent: **07.09.2022**
(21) Application number: 18778161.2
(22) Date of filing: 27.03.2018
(51) Int. Cl.: B60R 25/00

(54) **SMART CYLINDER LOCK DEVICE**
INTELLIGENTE ZYLINDERSCHLOSSVORRICHTUNG
DISPOSITIF DE VERROUILLAGE DE CYLINDRE INTELLIGENT

(30) Priority: 29.03.2017 IN 201711011118
(43) Date of publication of application: 05.02.2020
(73) Proprietor: Minda Corporation Limited, Noida (IN)
(72) Inventor: PURI, Vikram, Noida (IN); GOSWAMI, Deepak, Noida (IN); SINGH, Harjit, Noida (IN)
(74) Representative: Chas. Hude A/S
(86) International application number: PCT/IN2018/050175
(87) International publication number: WO 2018/179008

(56) References cited:
- EP-A1- 1 127 758
- EP-A1- 1 520 757
- EP-A2- 3 115 284
- WO-A1-2015/092754
- WO-A1-2015/092754
- DE-A1-102004 063 240
- US-A1- 2006 238 295
- US-A1- 2015 203 164
- US-B1- 6 508 088

## Description

### TECHNICAL FIELD:

The present disclosure relates to a smart cylinder lock device a for vehicle. More particularly, the present disclosure relates to an integrated two-wheeler hands free ignition switch and steering lock having the mechanical locking system as well as the electronic control circuit within the same unit.

### BACKGROUND:

Vehicle locks generally require a physical key to be inserted in a key opening to unlock the vehicle. Electronic locks which can be opened without a physical key are known in the art, like in e.g. WO2015/092754.

However, such locking mechanism also require operation of any electronic key by pressing button to unlock the vehicle. Moreover, after unlocking the vehicle with an electronic key, a user has to further operate another mechanism to unlock or switch other systems such as steering lock, ignition switch etc. Accordingly, a user has to operate more than one key or switch to unlock and run a vehicle. This may be cumbersome and require unnecessary efforts from a user.

Further, such vehicle locks include an electronic control unit (ECU) for monitoring and controlling of different operations of the locking system. An ECU is generally provided outside the housing of such locks. Which may further make the installation of the locks cumbersome. Also, ECU be subject to environmental factors such as dust, water, etc. Present disclosure is directed to address this problem and other associated problems.

### SUMMARY

The present disclosure relates to a smart cylinder lock device (100) for a vehicle used for providing a hands-free ignition switch and steering lock comprising a body (2) having a first end (2a) adapted to receive an inner knob (11) and a second end (2b) having a cavity (2c) to secure a rotor cam (12). The rotor cam (12) having a proximal end (12a) linked with the inner knob (11) and a distal end (12b) engaged with the electrical module (18). An outer knob (1) is coupled to the inner knob (11) through a spring (11b) loaded balls (11a) placed in the inner knob (11). An intermediate plate is co-axially secured in the rotor cam and connected with the knob at outer surface. A bracket latch bearing (9) is positioned between the body (2) and a body switch (4) which is operationally linked with the rotor cam to move linearly with the rotation of rotor-cam. The bearing latch bearing is adapted to receive a lock bar (3) wherein the lock bar (3) performs locking/unlocking of the vehicle. A solenoid (7) mounted on the body (4) having a spring (7b) and a locking pin (7a) wherein the locking pin (7a) locks/unlocks the rotor cam (12). The body switch (4) having an open end (4a) to secure the electrical module (18) and a close end (4b) secured with an electronic control circuit (8). A resiliently energized plunger (14) located inside the body switch (4) wherein first end (14a) of the plunger connects with the rotor cam (12) and second end (14b) of the plunger connects with a micro switch (15). The electronic control circuit (8) located inside the housing of the ignition switch to form an integrated ignition switch and steering lock.

### BRIEF DESCRIPTION OF FIGURES

Further aspects and advantages of the present invention will be readily understood from the following detailed description with reference to the accompanying figures. The figures together with a detailed description below, are incorporated in and form part of the specification, and serve to further illustrate the embodiments and explain various principles and advantages, in accordance with the present invention wherein:
Figure 1 shows the front view of the smart cylinder lock device in accordance with the embodiment of the present disclosure.
Figure 2-4 illustrates the assembled view of the lock device according to the present invention.
Figure 5 and 6 illustrates the exploded view of the lock device according to the embodiment of the present disclosure.
Figure 7 and 8 illustrates internal parts of the lock device according to the embodiment of the present disclosure.
Figure 9 illustrates the cover of the lock device in accordance with the embodiment of the present disclosure.
Figure 10 illustrates the different views of the outer knob in accordance with the embodiment of the present disclosure.
Figure 11 shows the bottom view of the outer knob illustrating the groove in the outer knob.
Figure 12(a)-12(d) shows perspective, top, front and bottom view of the inner knob in accordance with the embodiment of the present disclosure.
Figure 13 illustrates the assembly of outer and inner knob according to the embodiment of the present disclosure.
Figure 14(a)-14(d) shows perspective, top, bottom and front view of the inner knob in accordance with the embodiment of the present disclosure.
Figure 15 shows a solenoid assembly with locking pin according to the present disclosure.
Figure 15(a)-15(c) illustrates the perspective, front and rear view of the rotor cam in accordance with the embodiment of the present disclosure.
Figure 16(a)-16(d) shows perspective, top, side and bottom view of the bracket latch bearing accordance to embodiment of the present disclosure.
Figure 17(a)-17(d) shows perspective and front view of the lock bar in accordance with the embodiment of the present disclosure.
Figure 18(a)-18(e) shows perspective, top, side, bottom and side view of the body accordance to embodiment of the present disclosure.
Figure 19(a)-19(c) shows perspective, front and top view of the bracket latch bearing accordance to embodiment of the present disclosure.
Figure 20 (a)-20(b) illustrates the section view of the lock device showing locked and unlocked condition.
Figure 21 shows the sectional view showing arrangement of rotor cam, plunger and micro switch.
Figure 22 (a)-23(b) illustrates the section view of the knob assembly showing normal and over torque condition.

### DETAILED DESCRIPTION OF THE PRESENT DISCLOSURE

While the invention is subject to various modifications and alternative forms, specific embodiment thereof has been shown by way of example in the figures and will be described below.

Accordingly, the drawings are showing only those specific details that are pertinent to understanding the embodiments of the present invention so as not to obscure the disclosure with details that will be readily apparent to those of ordinary skill in the art having benefit of the description herein.

The terms "comprises", "comprising", or any other variations thereof, are intended to cover a non-exclusive inclusion, such that an assembly, setup, system, device that comprises a list of components does not include only those components but may include other components not expressly listed or inherent to such system or device or setup. In other words, one or more elements in the system or apparatus or device proceeded by "comprises a" does not, without more constraints, preclude the existence of other elements or additional elements in the assembly or system or apparatus. The following paragraphs explain present invention.

Accordingly, the present disclosure provides a smart cylinder lock device (100) for a vehicle used for providing a hands-free ignition switch and steering lock comprising a body (2) having a first end (2a) adapted to receive an inner knob (11) and a second end (2b) having a cavity (2c) to secure a rotor cam (12) wherein the rotor cam (12) having a proximal end (12a) linked with the inner knob (11) and a distal end (12b) engaged with the electrical module (18) an outer knob (1) coupled to the inner knob (11) through a spring (11b) loaded balls (11a) placed in the inner knob (11); an intermediate plate (19) is co-axially secured in the rotor cam and connected with the knob at outer surface ; a bracket latch bearing (9) positioned between the body (2) and a body switch (4) which is operationally linked with the rotor cam to move linearly with the rotation of rotor-cam; the said bearing latch bearing is adapted to receive a lock bar (3) wherein the lock bar (3) performs locking/unlocking of the vehicle; a solenoid (7) mounted on the body (4) having a spring (7b) and a locking pin (7a) wherein the locking pin (7a) locks/unlocks the rotor cam (12) at the predetermined positions of the knob; the body switch (4) having an open end (4a) to secure the electrical module (18) and a close end (4b) secured with an electronic control unit (8); a resiliently energized plunger (14) located inside the body (2) wherein first end (14a) of the plunger is about to connect with the rotor cam (12) and second end (14b) of the plunger is engaged with a spring to energize the plunger towards the knob , the said plunger pressed a micro switch (15) through an extended arm when the knob pushed down ; wherein the electronic control unit (8) located inside the body switch which is housed in the housing of the ignition switch to form an integrated ignition switch and steering lock.

In another embodiment of the present disclosure the outer knob (1) comprising an extended surface (1a) to allow user to operate the device and a groove (1a;1b) formed on the inside surface of the outer knob to secure the spring-loaded balls (11a).

In yet another embodiment of the present disclosure the inner knob (11) comprising an elongated first end (11c) wherein a pair of cavity (11d) is formed to secure the spring-loaded balls (11a) and a second end (11e) having an opening (11f) to secure the proximate end (12a) of the rotor cam (12).

In yet another embodiment of the present disclosure an intermediate plate (190 coaxially mounted with the knob such that inner knob (11) wherein a pair of cavity (11d) is formed is placed in between the knob (11) &intermediate plate (19). As a result, a knob-shaft assembly (200) is formed.

In a further embodiment of the present disclosure a spring (13) is mounted in between the knob-shaft assembly (200) and the body to always energized the knob towards the away from the top surface of the body.

In a further embodiment of the present disclosure the bracket latch bearing (9) comprising a slot (9e) at its front end (9a) to secure the rear end (3b) of lock bar (3); a slot (9d) through which the cam portion (9e) of the rotor cam passes.

In an alternate embodiment of the present disclosure the rotor cam (12) is having a disc (12c) provided in between the proximate end (12a) and the distal end (12b) which rest on the body.

In another embodiment of the present disclosure the lock bar (3) having a front end (3a) which moves longitudinally to lock/unlock the vehicle and the rear end (3b) secured in the extended slot (9c) of the bracket latch bearing (9).

In one more embodiment of the present disclosure the electronic control unit (8) is secured inside the closed end of body switch (4b). The said body switch closed end is further covered with a bottom cover (16) mounted on the body (2).

In another embodiment of the present disclosure atleast one coupler wire is coming out from the electronic control unit and the said coupler wire is having electrical and electronic connection which is further fixed with a coupler (5). The coupler (5) is used to connect with the vehicle control unit.

In an alternate embodiment of the present disclosure a cover (6) covers the inner knob (11) and body (2) of the lock device (100).

In a further embodiment of the present disclosure body plate (17) is mounted in the body such that the distal end (12b) of the rotor passes. In a further embodiment of the present disclosure body plate (17) is provided with the slots to passes the distal end of the rotor (12b).

In yet another embodiment of the present disclosure the electronic control unit (8) authenticate the correct user by matching the ID codes transmitted by the smart key with the Id codes stored in the Electronic control unit (8).

In an alternate embodiment of the present disclosure the microswitch (15) is pressed through the spring loaded plunger (14) when the knob is pushed.

In one more embodiment of the present disclosure the microswitch activate the electronic control unit (8) from sleep mode when pressed.

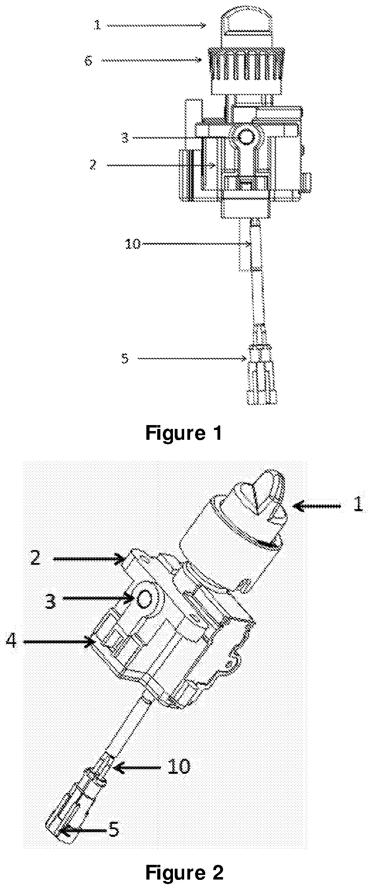

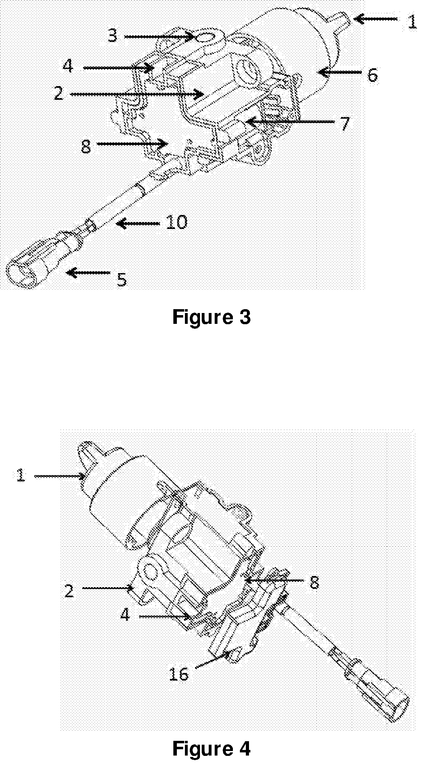

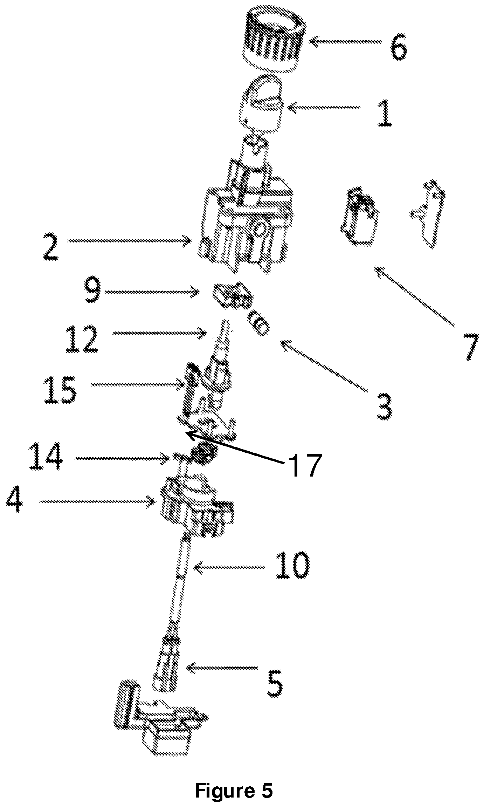

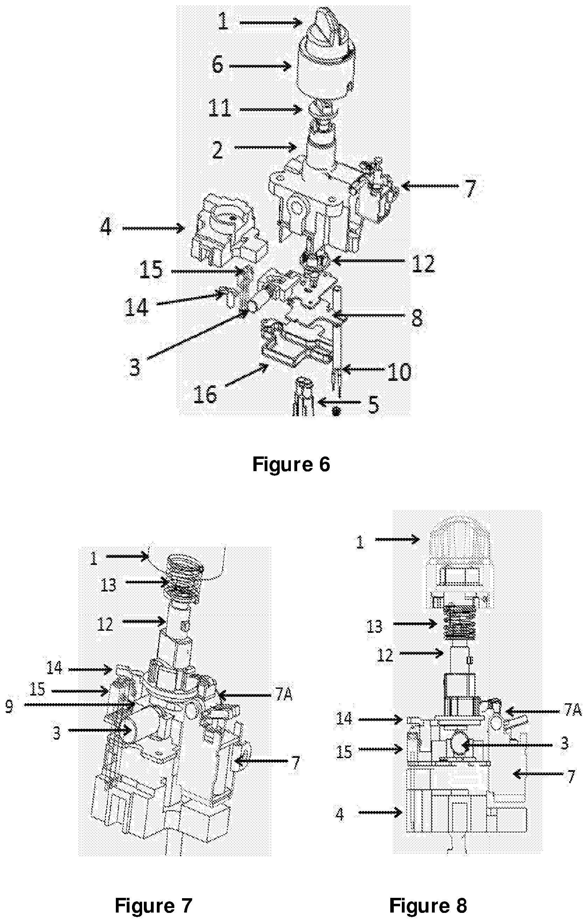

Figure 1 illustrates the front view of the smart cylinder lock device. Figure 2-4 illustrates the assembled and perspective view of the smart cylinder lock device. Figure 5 and 6 shows the exploded view of the smart cylinder lock device (100) according to the embodiment of the present disclosure. As shown in Figures 1- 8, the smart cylinder lock device (100) comprising an outer knob (1), a body (2), a lock bar (3), a body switch (4), a coupler (5), a coupler wire (10), a cover (6), a solenoid (7), an electronic control circuit (8), a bracket latch bearing (9), an inner knob (11), a rotor cam (12), a spring (13), a plunger (14), a micro switch (15), a bottom cover (16) and an intermediate plate (17).

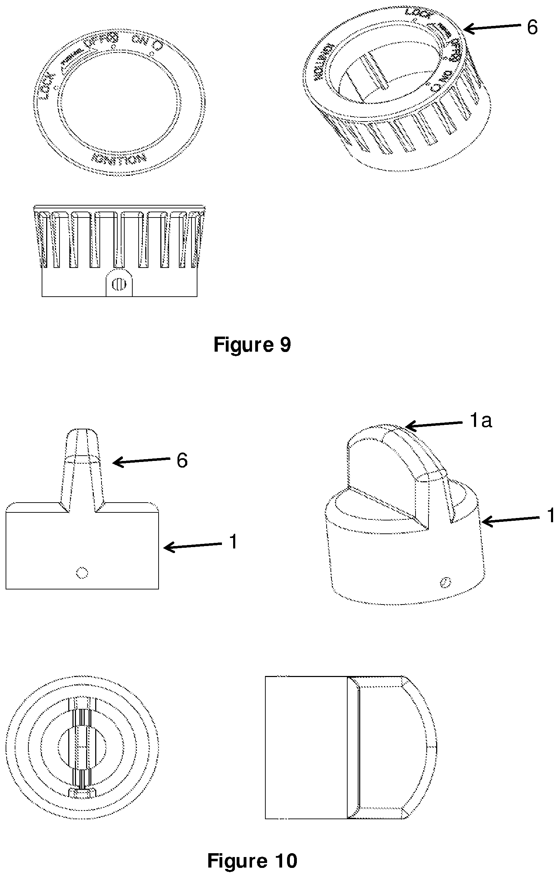

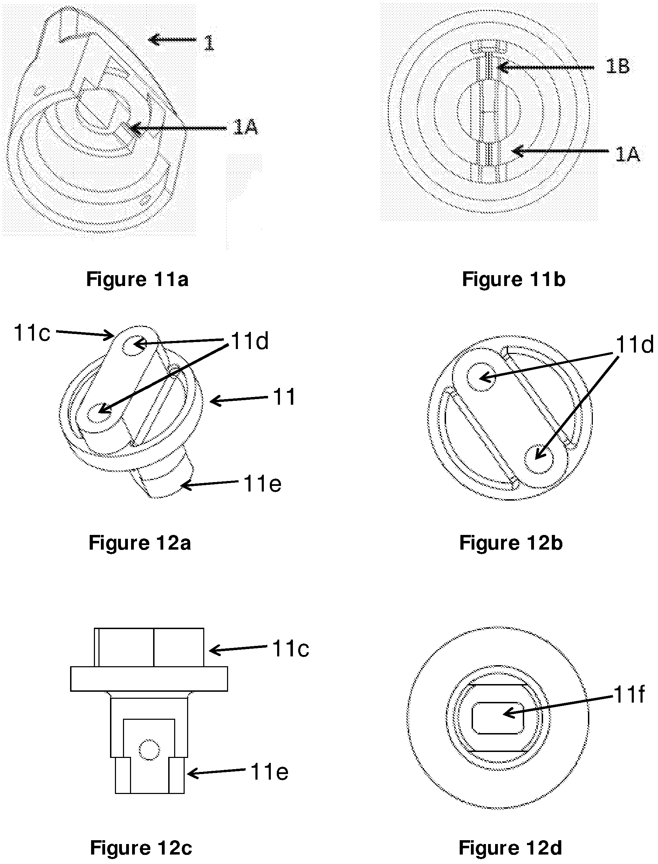

Figure 9-13 illustrates the knob shaft assembly (200) of the lock device. The outer knob (1) is having an extended surface (1a) which allows user to operate the lock device in the clockwise and anticlockwise direction. The user is also able to press the knob in the downward direction due to the presence of spring (13) in between the knob shaft and body. As illustrated in figure 11b, a groove (1a;1b) formed on the inside surface of the outer knob to secure the spring-loaded balls (11a). The inner knob (11) is having an elongated first end (11c) in which a pair of cavity (11d) is formed to secure the spring-loaded balls (11a) and an elongated second end (11e) having an opening (11f) to rigidly secure the proximate end (12a) of the rotor cam (12) through a dowel pin. An intermediate plate (19) is co-axially passes through the inner knob (11) from the distal end (11e) and rigidly fixed with the knob (1) on the outer peripheral surface through the pins. Hence the knob-shaft assembly (200) is formed as shown in figure (13) The outer knob is covered with a cover (6) which coaxially passes through the knob.

A knob shaft assembly (200) is fixed over the rotor cam through a dowel pin in the inner knob (11). The knob shaft assembly (200) consist of the outer knob (1) fitted over the inner knob (11) having spring loaded steel balls in the slots (11a). As shown in figure 11b, the knob is provided with at least two triangular grooves (1a,1b) to filled with the spring-loaded steel balls.

A spring (13) may be provided between the knob-shaft assembly and the body to bias the knob-shaft assembly in an upward direction, i.e. away from the body. The rotor cam may further be coupled to a spring-loaded plunger (14) such that when the knob is pushed downwards the body, the plunger is also pushed downwards.

The rotor cam is configured to convert a rotary motion of the rotor cam into a linear motion of lock bar. The linear motion of lock bar is utilized to lock or unlock a steering handle of the vehicle. The rotor cam is provided with slots (12d) which are configured to selectively engage with a locking pin (7A) provided on the solenoid (7) and a circular face to be rested on the body due to the resilient force of the spring (13). As illustrated in figure 7 ,8 and 15 the solenoid (7) is mounted on the body (2) having a spring (7b) and a locking pin (7a) wherein the locking pin (7a) locks/unlocks the rotor cam (12). The locking lever (7a) is hinged through a pin. The rotor cam and locking lever are arranged such that engagement of the locking lever with the slots of the rotor cam results in restricting rotary motion of the rotor cam. Whereas, disengagement of the locking lever from the slots allows rotation of rotor cam. Since rotor cam is coupled to the knob assembly, locking lever also enables or disables rotation of the knob-shaft assembly. The rotor cam (12) consists of the slot (12a) to accumulate spring loaded detent balls at both the opposite ends. The detent balls are operationally engaged in the v-grooves provided in the body at the lock position, off position and on position. The intermediate plate is co-axially secured in the inner knob and connected with the knob (1) at outer surface. A body plate (17) is mounted on the body so that the bearing latch bracket (9) can be operationally moved within the body and the top surface of the body-switch(4a) ). The body plate (17) consist of the slot (17c) to guide the rotor cam leg (12b) and slots (17a, (17b) to allow the rotor cam to operationally push at lock and off position only.

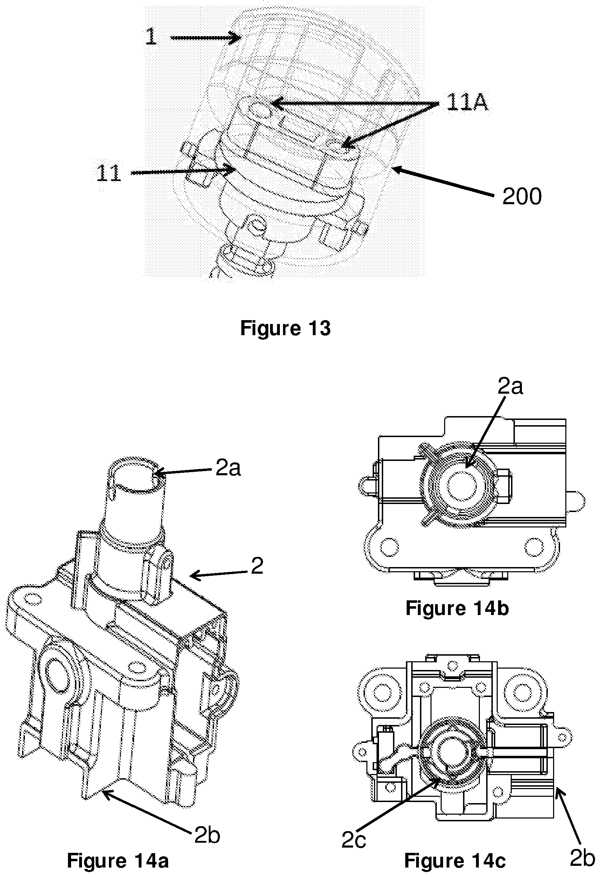

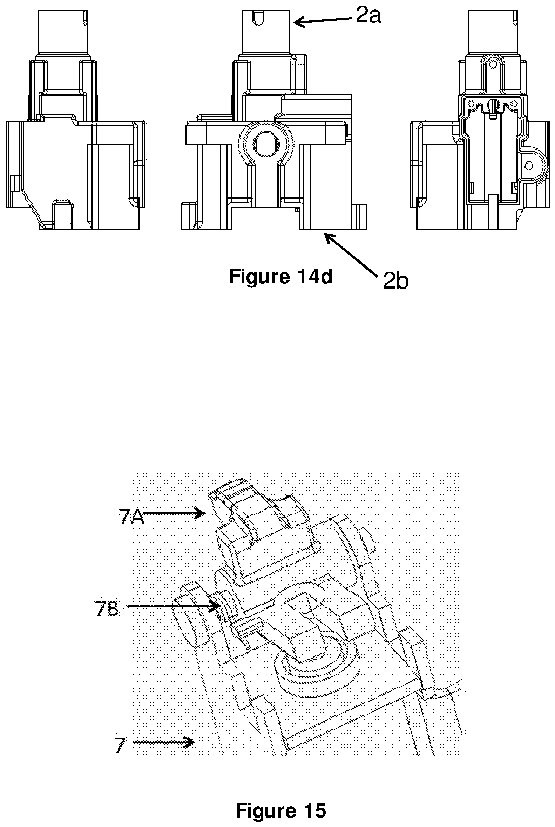

The body acts as a housing for accommodating different components of the lock device such as lock bar, body switch, solenoid, ECU, bracket latch bearing, rotor cam, plunger, micro switch etc. As illustrated in figure 14(a)-14(c), the body comprises of first end and a second end. The first end of the body is an extended cylindrical body positioned at the top of the body which is adapted to receive the inner knob and the second end of the body positioned at the bottom of the body is having a cavity to secure the rotor cam.

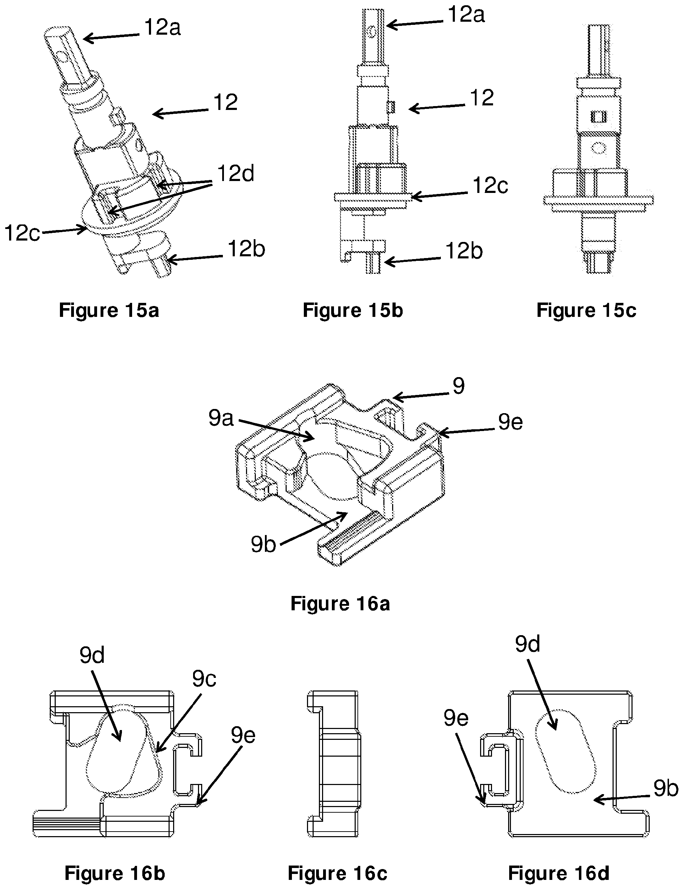

As shown in figure 15(a)-15(c) the rotor cam is having a proximal end (12a) and the distal end(12b). The proximal end is an elongated bar linked with the inner knob (11). The distal end (12b) is engaged with the electrical module (8). The distal end of the rotor cam is having a circular protruded or extended surface which is resting on the body and provided to operationally press the plunger 19. The rotor cam (12) is also a pair of slots (12d) is positioned in between the proximal end and distal end of the rotor so to connect with the bracket (9e) of the bracket latch bearing (9).

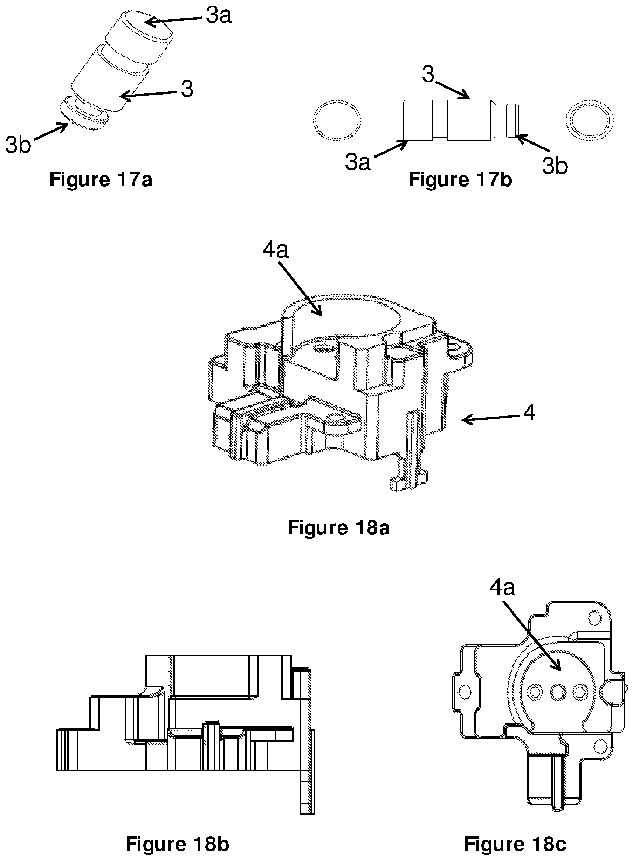

As illustrated in figure 16(a) -16(d) the bracket latch bearing (9) comprising a slot (9d) to secure the cam portion (12e) of the rotor The bracket latch bearing is also having an extended slot (9e) positioned at the side of the bracket latch bearing (9) to hold the lock bar (3). The slot of the rotor cam and the bracket of the bracket latch bearing are arranged in such a way that the rotation of the rotor cam is transformed into the linear movement of the lock bar. As described above, the bearing latch bearing is adapted to receive a lock bar (3) wherein the linear movement of the lock bar (3) performs locking/unlocking of the vehicle. The lock bar as shown in figure 17(a) -17(b) is a cylindrical body wherein the front end of the lock body moves in the linear direction to lock/unlock the vehicle and the rear

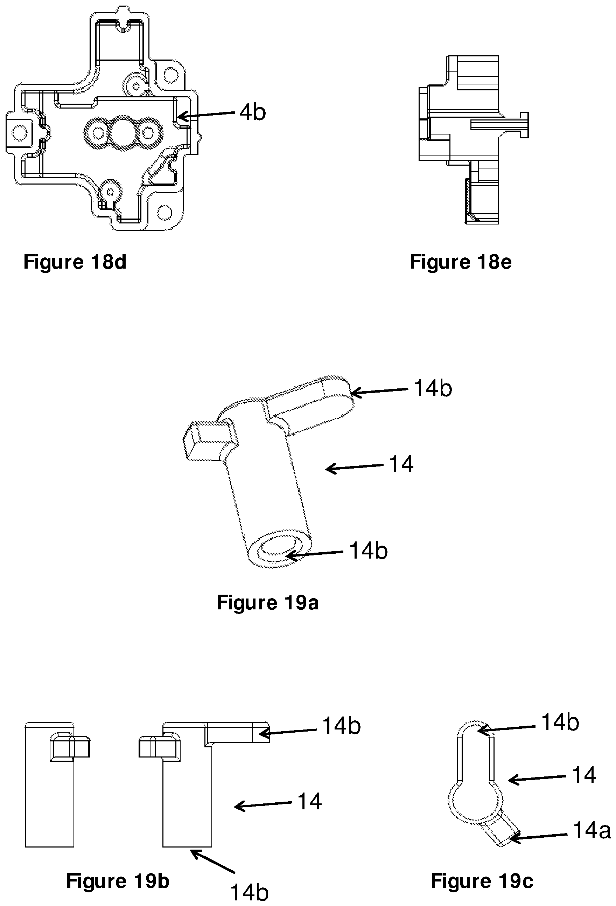

Figure 18(a)-18(e) shows the body switch (4) having an open end (4a) to secure the electrical module (18) and a close end (4b) secured with an electronic control unit (8).

The resiliently energized plunger (14) located inside the body switch (4). Figure 19(a) -19(c) illustrates the first end (14a) of the plunger having an elongated surface which connects with the rotor cam (12) and a cylindrical second end (14b) of the plunger connected with a micro switch (15). The electronic control circuit (ECU) (8) is located inside the housing of the ignition switch to form an integrated ignition switch and steering lock. The micro switch is placed in the body such that downward motion of the plunger results in the plunger contacting the micro switch and toggling the micro switch. The micro switch is coupled to the ECU and toggling of micro switch sends an activation signal to the ECU to initiate authentication process.

In locked state, the locking lever remains engaged with the slots of the rotor cam, thus preventing rotation of the inner knob when locked. Once the authentication is determined as positive, the ECU sends a signal to activate the solenoid. This results in the movement of the locking pin and disengaging the locking pin from the rotor cam and thus allow rotation of the inner knob.

The body switch (4) is provided with the contact terminal (4a) on the top. At On position the contact terminal (4a) is in contact with the electrical unit, thereby a circuit is closed to allow ignition. The bottom side of the body switch (4) is provided with a recess for the electronic control unit to accumulate. After assembly of ECU in the body, the electronic control circuit cover 16 is mounted with the body at the bottom side. Accordingly, ECU is housed in the body, which improves overall robustness of the smart cylinder lock as provided herein.

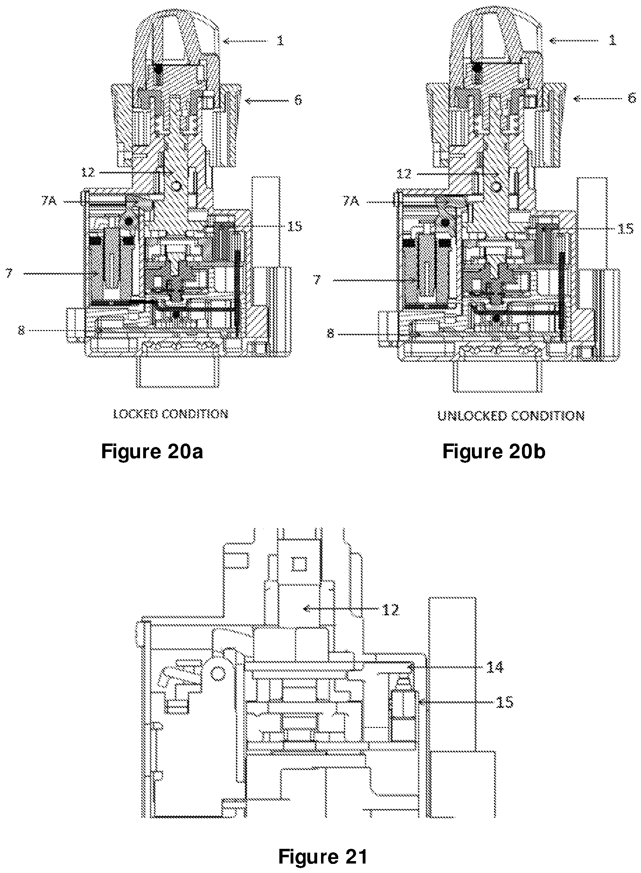

Figure 20 (a)- 23(b) explains the operation of the lock which is described as follows:
To operate the lock, the outer knob (1) is pressed by the user. Outer Knob (1) of the knob assembly is directly linked to the rotor cam (12). Pushing the outer knob (1) presses the rotor cam (12) down which is linked to a plunger (14). The downward motion of the plunger (14) presses the micro switch (15) which generates an activation signal. This activation signal from the micro switch (15) is used by the electronic control unit (8) to initiate the authentication process. The electronic control unit (8) starts searching for the authentic electronic key (not shown) within a specified range. Spring (13) returns the knob assembly back to its original position.

If an authentic electronic key (not shown) is found in the specified range, the electronic control circuit (8) sends a signal to the solenoid (7) to pull out the spring (7B) loaded solenoid plunger and hence rotate the locking pin (7A) from engagement with the rotor cam (12). This allows the rotor cam (12) to operationally rotate and allows the user to perform the unlocking procedure. Rotation of rotor cam (12) is transformed into the linear movement of lock bar (3) through the bracket latch bearing (9), thereby allowing the user to perform the locking and unlocking of the vehicle.

In case an authentic electronic key (not shown) is not found within the specified range, the electronic control unit (8) does not send signal the solenoid (7) to disengage the spring (7B) loaded solenoid locking lever (7A) from the rotor cam (12), thereby restricting its rotation.

The knob assembly is provided with the spring-loaded steel balls which occupy the triangular slots in the knob. Hence the rotation of the outer knob to inner knob is transferred though the spring-loaded steel balls. At lock position (i.e. when the rotor cam is locked through the locking lever) , if any user apply the excessive torque the steel balls moves down and come out of the triangular slots and hence rotate freely.

Authentication may be done by using an authentication device which may be carried by a user in his pocket or his bag. When the ECU starts authentication process, the ECU searches whether the authentication device is present within a predetermined surrounding area in proximity of the lock or the vehicle. Once an authentication device is found within proximity, the ECU determines whether the authentication device has a matching electronic key with the key as configured in the ECU. Once the key is matched as positive, the authentication is determined as positive and the locking lever (7a) is disengaged for allowing further normal operation of the lock. Once locking lever is disengaged, the outer knob may be rotated for unlocking the steering handle and further switching on the ignition or any other locking mechanism. A user may directly approach the vehicle along with the authentication device and push the outer knob on the vehicle to unlock the vehicle. The authentication device may be any device capable of storing an electronic key. For example, a device capable to produce RF signals may be used as an authentication device.

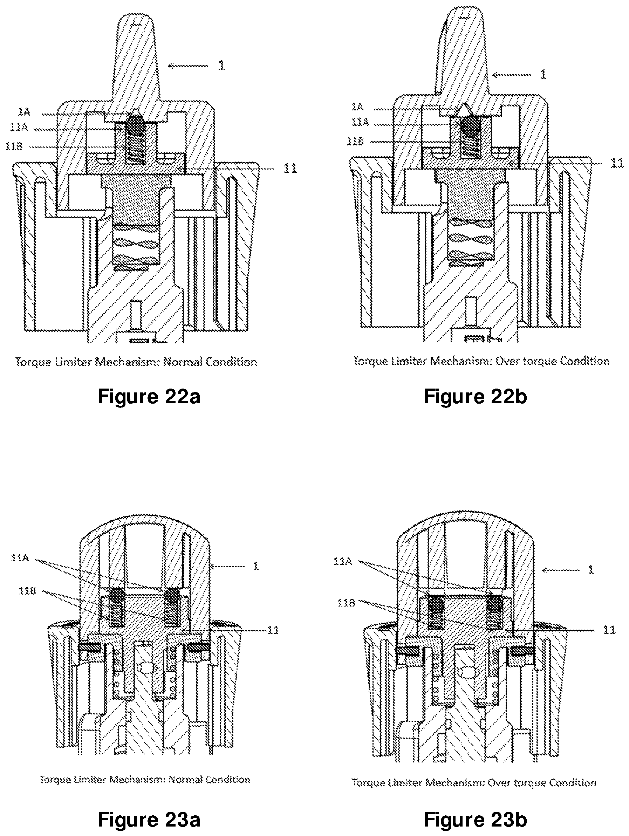

In such a condition where the rotation of rotor cam (12) is restricted, a freewheeling mechanism is provided to prevent damage to the locking system in case excess torque is applied on the outer knob (1). As illustrated in figure 22(a) -23(b) the outer knob (1) is coupled to the inner knob (11) through the spring (11B) loaded balls (11A) present in the inner knob (11). The springs (11B) push the balls (11A) inside the triangular grooves (1A and 1B) made on the inside surface of outer knob (1). When excess torque is applied at the outer knob (1) the balls (11A) disengage from the triangular grooves (1A and IB), hence the outer knob performs a freewheeling action without transferring the torque to the inner knob (11) and rotor cam (12). Thus, a user does not require to handle and operate a physical key for operation of the lock in accordance with the lock as described herein.

### Equivalents:

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

The use of the expression "at least" or "at least one" suggests the use of one or more elements or ingredients or quantities, as the use may be in the embodiment of the disclosure to achieve one or more of the desired objects or results.

Any discussion of documents, acts, materials, devices, articles and the like that has been included in this specification is solely for the purpose of providing a context for the disclosure. It is not to be taken as an admission that any or all of these matters form a part of the prior art base or were common general knowledge in the field relevant to the disclosure as it existed anywhere before the priority date of this application.

The numerical values mentioned for the various physical parameters, dimensions or quantities are only approximations and it is envisaged that the values higher/lower than the numerical values assigned to the parameters, dimensions or quantities fall within the scope of the disclosure, unless there is a statement in the specification specific to the contrary.

**LIST OF REFERNCE NUMERALS**

| | |
|---|---|
| Smart Cylinder Lock Device | (100) |
| Outer Knob | (1) |
| Extended surface | (1a) |
| Groove | (1a;1b) |
| Body | (2) |
| First end of Body | (2a) |
| Second end of Body | (2b) |
| Cavity in Body | (2c) |
| Lock bar (3) | (3) |
| Front end of Lock Bar | (3a) |
| rear end of Lock Bar | 3b |
| body switch | (4) |
| open end of Body Switch | (4a) |
| close end of body switch | (4b) |
| Coupler | (5) |
| Cover | (6) |
| Solenoid | (7) |
| Locking Pin | (7a) |
| Spring | (7b) |
| Electronic Control Unit | (8) |
| Bracket Latch Bearing | (9) |
| Front end of Bracket Latch Bearing | (9a) |
| Bottom end of Bracket Latch Bearing | (9b) |
| Curved surface of Bracket Latch Bearing | (9c) |
| Cavity | (9d) |
| Bracket | (9e) |
| Coupler Wire | (10) |
| Inner Knob | 11 |
| Spring Loaded Balls (11a) | 11a |
| Spring | 11b |
| Elongated First End | (11c) |
| Pair of Cavity | (11d) |
| Second End | (11e) |
| Opening | (11f) |
| Rotor Cam | (12) |
| Proximal End of Rotor Cam | (12a) |
| Distal End of Rotor Cam | (12b) |
| Disc of Rotor Cam | (12c) |
| Slot in Rotor Cam | (12d) |
| Spring | (13) |
| Resiliently Energized Plunger | (14) |
| First end of the Plunger | (14a) |
| Second end of the Plunger | (14b) |
| Micro Switch | (15) |
| Electronic Control Circuit Cover | (16) |
| Body Plate | (17) |
| Electrical Module | (18) |
| Knob Shaft Assembly | (200) |

## Claims

1. A smart cylinder lock device (100) for a vehicle used for providing a hands-free ignition switch and steering lock comprising:
a body (2) having a first end (2a) adapted to receive an inner knob (11) and a second end (2b) having a cavity (2c) to secure a rotor cam (12) wherein the rotor cam (12) having a proximal end (12a) linked with the inner knob (11) and a distal end (12b) engaged with the electrical module (18);
an outer knob (1) coupled to the inner knob (11) through a spring (11b) loaded balls (11a) placed in the inner knob (11);
an intermediate plate (19) is co-axially secured in the rotor cam and connected with the knob at outer surface
a bracket latch bearing (9) positioned between the body (2) and body switch (4) which is operationally linked with the rotor cam to move linearly with the rotation of rotor-cam
the said bearing latch bearing is adapted to receive a lock bar (3) wherein the lock bar (3) performs locking/unlocking of the vehicle
a solenoid (7) mounted on the body (4) having a spring (7b) and a locking pin (7a) wherein the locking pin (7a) locks/unlocks the rotor cam (12);
the body switch (4) having an open end (4a) to secure the electrical module (17) and a close end (4b) to secure with an electronic control unit (8);
a resiliently energized plunger (14) located inside the body (2) wherein first end (14a) of the plunger connects with the rotor cam (12) and second end (14b) of the plunger (14) is engaged with a spring to energize the plunger (14) towards the inner knob (11) , the said plunger (14) presses a micro switch (15) through the second end of the plunger (14b) ;
wherein the electronic control unit (8) located inside the body switch which is housed in the housing of the ignition to form an integrated ignition switch and steering lock.

2. The smart cylinder lock device as claimed in claim 1 wherein the outer knob (1) comprising an extended surface (1a) to allow user to operate the device and a groove (1a;1b) formed on the inside surface of the outer knob to secure the spring-loaded balls (11a).

3. The smart cylinder lock device as claimed in claim 1 wherein the inner knob (11) comprising: an elongated first end (11c) wherein a pair of cavity (11d) is formed to secure the spring-loaded balls (11a) and a second end (11e) having an opening (11f) to secure the proximate end (12a) of the rotor cam (12).

4. The smart cylinder lock device as claimed in claim 1 wherein the intermediate plate (19) is coaxially mounted with inner knob (11) and a pair of cavity (11d) is formed in between the knob (11) and intermediate plate (19) resulting in a knob-shaft assembly (200).

5. The smart cylinder lock device as claimed in claim 1 wherein a spring (13) is mounted in between the knob-shaft assembly (200) and the body (2) to energize the knob towards the top surface of the body.

6. The smart cylinder lock device as claimed in claim 1 wherein the bracket latch bearing (9) comprising a slot (9e) at its front end (9a) to secure the rear end (3b) of lock bar (3) and a slot (9d) through which the cam portion (9e) of the rotor cam passes through.

7. The smart cylinder lock device as claimed in claim 1 wherein the rotor cam (12) is having a disc (12c) provided in between the proximate end (12a) and the distal end (12b) which rest on the body.

8. The smart cylinder lock device as claimed in claim 1 wherein the lock bar (3) having a front end (3a) which moves longitudinally to lock/unlock the vehicle and the rear end (3b) secured in the extended slot (9c) of the bracket latch bearing (9).

9. The smart cylinder lock device as claimed in claim 1 wherein the electronic control unit (8) is secured in closed end of body switch (4b) wherein the said closed end of body switch (4b) is covered with a bottom cover (16) mounted on the body (2).

10. The smart cylinder lock device as claimed in claim 1 wherein a coupler (5) is connected with the coupler wire to connect with the vehicle control unit wherein one or more coupler wire is connected with the electronic control circuit.

11. The smart cylinder lock device as claimed in claim 1 wherein a cover (6) covers the inner knob (11) and body (2) of the lock device (100).

12. The smart cylinder lock device as claimed in claim 1 wherein a body plate (17) is mounted in the body such that the distal end (12b) of the rotor passes through.

13. The smart cylinder lock device as claimed in claim 1 wherein the body plate (17) is provided with the slots to passes the distal end of the rotor (12b).

14. The smart cylinder lock device as claimed in claim 1 wherein the electronic control unit (8) authenticate the correct user by matching the ID codes transmitted by the smart key with the Id codes stored in the Electronic control unit (8).

15. The smart cylinder lock device as claimed in claim 1 wherein the microswitch (15) is pressed through the spring-loaded plunger (14) when the knob is pushed.

16. The smart cylinder lock device as claimed in claim 1 wherein the microswitch activate the electronic control unit (8) from sleep mode when pressed.

## Patentansprüche

1. Eine intelligente Zylinderschlossvorrichtung (100) für ein Fahrzeug, die verwendet wird, um eine handfreies Zündschloss und Lenkradschloss bereitzustellen, umfassend:
ein Gehäuse (2) mit einem ersten Ende (2a), das geeignet ist, um einen Innenknauf (11) aufzunehmen und ein zweites Ende (2b) mit einem Hohlraum (2c), um eine Rotornocke (12) zu befestigen, wobei die Rotornocke (12) ein proximales Ende (12a) hat, das mit dem Innenknauf (11) verbunden ist, und ein distales Ende (12b) hat, das mit dem elektrischen Modul (18) in Eingriff steht;
einen Außenknauf (1), der mit dem Innenknauf (11) über Feder (11b) belastete Kugeln (11a), die in dem Innenknauf (11) angeordnet sind, verbunden ist;
eine Zwischenplatte (19), die koaxial in der Rotornocke befestigt ist und
an der Außenfläche mit dem Knauf verbunden ist
ein Halterungsverriegelungslager (9), das zwischen dem Gehäuse (2) und dem Gehäuseschalter (4) positioniert ist, das funktionell mit der Rotornocke verbunden ist, um sich linear mit der Drehung der Rotornocke zu bewegen jenes Lagerverriegelungslager, das zur Aufnahme einer Verriegelungsstange (3) geeignet ist, wobei die Verriegelungsstange (3) die Verriegelung/Entriegelung des Fahrzeugs vornimmt
ein Solenoid (7), das auf dem Gehäuse (4) montiert ist und eine Feder (7b) und
einen Verriegelungsstift (7a) hat, wobei der Verriegelungsstift (7a) den Rotornocken (12) verriegelt/entriegelt;
den Gehäuseschalter (4), der ein offenes Ende (4a) zum Befestigen des elektrischen Moduls (17) und ein geschlossenes Ende (4b) zum Befestigen mit einer elektronischen Steuereinheit (8) hat;
einen elastisch dynamisierten Kolben (14), der im Inneren des Gehäuses (2) angeordnet ist, wobei das erste Ende (14a) des Kolbens mit der Rotornocke (12) verbunden ist und das zweite Ende (14b) des Kolbens (14) mit einer Feder in Eingriff steht, um den Kolben (14) in Richtung des Innenknaufs (11) zu dynamisieren, wobei jener Kolben (14) einen Mikroschalter (15) durch das zweite Ende des Kolbens (14b) drückt;
wobei die elektronische Steuereinheit (8) im Inneren des Gehäuseschalters angeordnet ist, der im Gehäuse der Zündung untergebracht ist, um einen integrierten Zündschalter und ein Lenkradschloss zu bilden.

2. Die intelligente Zylinderschlossvorrichtung nach Anspruch 1, wobei der Außenknauf (1) eine verlängerte Oberfläche (1a) umfasst, um dem Benutzer die Bedienung der Vorrichtung zu ermöglichen, und eine Nut (1a; 1b) aufweist, die auf der Innenfläche des Außenknaufs ausgebildet ist, um die federbelasteten Kugeln (11a) zu befestigen.

3. Die intelligente Zylinderschlossvorrichtung nach Anspruch 1, wobei der Innenknauf (11) umfasst: ein längliches erstes Ende (11c), in dem ein Paar von Hohlräumen (11d) ausgebildet ist, um die federbelasteten Kugeln (11a) zu befestigen, und ein zweites Ende (11e) mit einer Öffnung (11f), um das proximale Ende (12a) der Rotornocke (12) zu befestigen.

4. Die intelligente Zylinderschlossvorrichtung nach Anspruch 1, wobei die Zwischenplatte (19) koaxial mit dem Innenknauf (11) montiert ist und ein Paar von Hohlräumen (11d) zwischen dem Knauf (11) und der Zwischenplatte (19) ausgebildet ist, was zu einer Knauf-Wellen-Anordnung (200) führt.

5. Die intelligente Zylinderschlossvorrichtung nach Anspruch 1, wobei eine Feder (13) zwischen der Knauf-Wellen-Anordnung (200) und dem Gehäuse (2) montiert ist, um den Knauf in Richtung der Oberseite des Gehäuses zu dynamisieren.

6. Die Intelligente Zylinderschlossvorrichtung nach Anspruch 1, wobei das Halterungsverriegelungslager (9) einen Schlitz (9e) an seinem vorderen Ende (9a) umfasst, um das hintere Ende (3b) der Verriegelungsstange (3) zu befestigen, und einen Schlitz (9d), durch den der Nockenabschnitt (9e) der Rotornocke durchläuft.

7. Die intelligente Zylinderschlossvorrichtung nach Anspruch 1, wobei die Rotornocke (12) eine Scheibe (12c) hat, die zwischen dem proximalen Ende (12a) und dem distalen Ende (12b) bereitgestellt ist, die auf dem Gehäuse ruhen.

8. Die intelligente Zylinderschlossvorrichtung nach Anspruch 1, wobei die Verriegelungsstange (3) ein vorderes Ende (3a) hat, das sich in Längsrichtung bewegt, um das Fahrzeug zu verriegeln/entriegeln, und das hintere Ende (3b) hat, das in dem verlängerten Schlitz (9c) des Halterungsverriegelungslagers (9) befestigt ist.

9. Die intelligente Zylinderschlossvorrichtung nach Anspruch 1, wobei die elektronische Steuereinheit (8) im geschlossenen Ende des Gehäuseschalters (4b) befestigt ist, wobei jenes geschlossene Ende des Gehäuseschalters (4b) mit einer unteren Abdeckung (16) abgedeckt ist, die an dem Gehäuse (2) montiert ist.

10. Die intelligente Zylinderschlossvorrichtung nach Anspruch 1, wobei ein Koppler (5) mit dem Kupplungsdraht verbunden ist, um eine Verbindung mit der Fahrzeugsteuereinheit herzustellen, wobei ein oder mehrere Kupplungsdrähte mit der elektronischen Steuereinheit verbunden sind.

11. Die intelligente Zylinderschlossvorrichtung nach Anspruch 1, wobei eine Abdeckung (6) den Innenknauf (11) und das Gehäuse (2) der Schlossvorrichtung (100) abdeckt.

12. Die intelligente Zylinderschlossvorrichtung nach Anspruch 1, wobei eine Gehäuseplatte (17) in dem Gehäuse so montiert ist, dass das distale Ende (12b) des Rotors hindurchgeht.

13. Die intelligente Zylinderschlossvorrichtung nach Anspruch 1, wobei die Gehäuseplatte (17) mit den Schlitzen bereitgestellt ist, um das distale Ende des Rotors (12b) zu passieren.

14. Die intelligente Zylinderschlossvorrichtung nach Anspruch 1, wobei die elektronische Steuereinheit (8) den richtigen Benutzer authentifiziert, indem sie die vom Smart Key übertragenen ID Codes mit den in der elektronischen Steuereinheit (8) gespeicherten ID Codes abgleicht.

15. Die intelligente Zylinderschlossvorrichtung nach Anspruch 1, wobei der Microschalter (15) durch den federbelasteten Kolben (14) gedrückt wird, wenn der Knauf gedrückt wird.

16. Die intelligente Zylinderschlossvorrichtung nach Anspruch 1, wobei der Microschalter die elektronische Steuereinheit (8) aus dem Schlafmodus aktiviert, wenn er gedrückt wird.

## Revendications

1. Dispositif de verrouillage de cylindre intelligent (100) pour un véhicule, utilisé pour fournir un commutateur d'allumage mains libres et un verrou de direction, comprenant :
un corps (2) ayant une première extrémité (2a) adaptée pour recevoir un bouton interne (11) et une seconde extrémité (2b) pourvue d'une cavité (2c) destinée à fixer une came de rotor (12), la came de rotor (12) ayant une extrémité proximale (12a) reliée au bouton interne (11) et une extrémité distale (12b) en prise avec le module électrique (18) ;
un bouton externe (1) couplé au bouton interne (11) par l'intermédiaire de billes (11a) à ressort (11b), placées dans le bouton interne (11) :
une plaque intermédiaire (19) fixée coaxialement dans la came de rotor et reliée au bouton en surface extérieure ;
un support de verrouillage (9) positionné entre le corps (2) et un commutateur de corps (4), qui est fonctionnellement relié à la came de rotor pour se déplacer linéairement avec la rotation de la came de rotor ;
ledit support de verrouillage est adapté pour recevoir une barre de verrouillage (3), la barre de verrouillage (3) opérant le verrouillage/déverrouillage du véhicule ;
un solénoïde (7) monté sur le corps (4), doté d'un ressort (7b) et d'un axe de verrouillage (7a), dans lequel l'axe de verrouillage (7a) verrouille/déverrouille la came de rotor (12) ;
le commutateur de corps (4) ayant une extrémité ouverte (4a) pour fixer le module électrique (17) et une extrémité fermée (4b) pour fixation avec une unité de commande électronique (8) ;
un piston sollicité élastiquement (14), situé à l'intérieur du corps (2), dans lequel la première extrémité (14a) du piston se raccorde à la came de rotor (12) et la seconde extrémité (14b) du piston (14) est en prise avec un ressort pour solliciter le piston (14) en direction du bouton interne (11), ledit piston (14) pressant un microcommutateur (15) via la seconde extrémité du piston (14b) ;
l'unité de commande électronique (8) étant située à l'intérieur du commutateur de corps qui est logé dans le logement de l'allumage pour former un commutateur d'allumage et verrou de direction intégré.

2. Dispositif de verrouillage de cylindre intelligent (100) selon la revendication 1, dans lequel le bouton externe (1) comprend une surface étendue (1a) pour permettre à l'utilisateur de faire fonctionner le dispositif et une rainure (la ; 1b) formée sur la surface intérieure du bouton externe pour fixer les billes à ressort (11a).

3. Dispositif de verrouillage de cylindre intelligent (100) selon la revendication 1, dans lequel le bouton interne (11) comprend : une première extrémité allongée (11c), une paire de cavités (11d) étant formée pour fixer les billes à ressort (11a), et une seconde extrémité (11e) présentant une ouverture (11f) pour fixer l'extrémité proximale (12a) de la came de rotor (12).

4. Dispositif de verrouillage de cylindre intelligent (100) selon la revendication 1, dans lequel la plaque intermédiaire (19) est montée coaxialement avec le bouton interne (11) et une paire de cavités (11d) est formée entre le bouton (11) et la plaque intermédiaire (19) pour réaliser un ensemble bouton-arbre (200).

5. Dispositif de verrouillage de cylindre intelligent (100) selon la revendication 1, dans lequel un ressort (13) est monté entre l'ensemble bouton-arbre (200) et le corps (2) pour solliciter le bouton en direction de la surface supérieure du corps.

6. Dispositif de verrouillage de cylindre intelligent (100) selon la revendication 1, dans lequel le support de verrouillage (9) comprend une fente (9e) à son extrémité avant (9a) pour fixer l'extrémité arrière (3b) de la barre de verrouillage (3) et une fente (9d) à travers laquelle passe la partie de came (9e) de la came de rotor.

7. Dispositif de verrouillage de cylindre intelligent (100) selon la revendication 1, dans lequel la came de rotor (12) est pourvue d'un disque (12c) situé entre l'extrémité proximale (12a) et l'extrémité distale (12b), reposant sur le corps.

8. Dispositif de verrouillage de cylindre intelligent (100) selon la revendication 1, dans lequel la barre de verrouillage (3) présente une extrémité frontale (3a) qui se déplace longitudinalement pour verrouiller/déverrouiller le véhicule et dont l'extrémité arrière (3b) est fixée dans la fente allongée (9c) du support de verrouillage (9).

9. Dispositif de verrouillage de cylindre intelligent (100) selon la revendication 1, dans lequel l'unité de commande électronique (8) est fixée dans l'extrémité fermée (4b) du commutateur de corps, ladite extrémité (4b) du commutateur de corps étant recouverte d'un couvercle inférieur (16) monté sur le corps (2).

10. Dispositif de verrouillage de cylindre intelligent (100) selon la revendication 1, dans lequel un coupleur (5) est connecté au fil de coupleur pour se raccorder à l'unité de commande du véhicule, un ou plusieurs fils de coupleur étant connectés au circuit de commande électronique.

11. Dispositif de verrouillage de cylindre intelligent (100) selon la revendication 1, dans lequel un couvercle (6) recouvre le bouton interne (11) et le corps (2) du dispositif de verrouillage (100).

12. Dispositif de verrouillage de cylindre intelligent (100) selon la revendication 1, dans lequel une plaque de corps (17) est montée dans le corps de façon à permettre le passage de l'extrémité distale (12b) du rotor.

13. Dispositif de verrouillage de cylindre intelligent (100) selon la revendication 1, dans lequel la plaque de corps (17) est pourvue des fentes permettant le passage de l'extrémité distale (12b) du rotor.

14. Dispositif de verrouillage de cylindre intelligent (100) selon la revendication 1, dans lequel l'unité de commande électronique (8) authentifie le bon utilisateur en faisant correspondre les codes ID transmis par la clé intelligente avec les codes ID mémorisés dans l'unité de commande électronique (8).

15. Dispositif de verrouillage de cylindre intelligent (100) selon la revendication 1, dans lequel le microcommutateur (15) est pressé à travers le piston à ressort (14) lorsque l'on appuie sur le bouton.

16. Dispositif de verrouillage de cylindre intelligent (100) selon la revendication 1, dans lequel le microcommutateur (15) active l'unité de commande électronique (8) à partir du mode veille lorsqu'il est pressé.
